# Europäisches Patentamt
# European Patent Office
# Office européen des brevets

(11) Veröffentlichungsnummer: **0 151 954**
**B1**

(12) **EUROPÄISCHE PATENTSCHRIFT**

(45) Veröffentlichungstag der Patentschrift:
**12.08.87**

(21) Anmeldenummer: **85100472.1**

(22) Anmeldetag: **18.01.85**

(51) Int. Cl.⁴: **C 25 D 5/56, C 25 B 11/20**

(54) Verfahren zur kontinuierlichen Beschichtung eines Feststoffelektrolyten mit einem katalytisch aktiven Metall.

(30) Priorität: **26.01.84 CH 355/84**

(43) Veröffentlichungstag der Anmeldung:
**21.08.85 Patentblatt 85/34**

(45) Bekanntmachung des Hinweises auf die Patenterteilung:
**12.08.87 Patentblatt 87/33**

(84) Benannte Vertragsstaaten:
**CH DE FR GB IT LI SE**

(56) Entgegenhaltungen:
**EP-A-0 048 505**
**DE-A-1 421 951**

(73) Patentinhaber: **BBC Aktiengesellschaft Brown, Boveri & Cie., Haselstrasse, CH- 5401 Baden (CH)**

(72) Erfinder: **Killer, Eric, Zentralstrasse 95, CH- 5430 Wettingen (CH)**

LIBER, STOCKHOLM 1987

## Beschreibung

Die Erfindung geht aus von einem Verfahren zur kontinuierlichen Beschichtung eines Feststoffelektrolyten nach der Gattung des Anspruchs 1.

In der wässerigen Elektrolyse, insbesondere bei der Herstellung von Wasserstoff durch Wasserzersetzung werden immer mehr Feststoffelektrolyte auf der Basis organischer Kunststoffe eingesetzt. Es erweist sich als notwendig, derartige Feststoffelektrolyte, welche in der Regel als Folien vorliegen, mit einem geeigneten Elektrokatalysator, meist einem Platinmetall zu beschichten. Ein derartiges Beschichtungsverfahren, welches auf einer elektrolytischen Abscheidung des betreffenden Metalls beruht, sowie eine entsprechende Apparatur ist aus der DE-A-2 821 271 bekannt. Dabei wird die zu beschichtende Kunststoff-Folie zunächst mit einer wässerigen Metallsalzlösung imprägniert und dann in eine Sandwich-Elektrolysezelle eingesetzt und einer Elektrolyse unterworfen, wobei das Metall kathodenseitig abgeschieden wird.

Für die Beschichtung grossflächiger Folien und die Verarbeitung grösserer Mengen sind kontinuierliche Verfahren und Vorrichtungen entwickelt worden (siehe US-A-4 396 469). Dabei wird die mit einer Metallsalzlösung imprägnierte Feststoffelektrolyt-Folie zwischen zwei als Elektroden ausgebildeten Walzen hindurchgeführt.

Bei Anwendung der vorgenannten Verfahren werden im allgemeinen ausreichend haftende gleichmässige Überzüge von Elektrokatalysatoren auf dem Feststoffelektrolyten erhalten. Es besteht indessen das Bedürfnis, die Haftfestigkeit der Beschichtung sowie ihre Struktur weiter zu verbessern, reproduzierbarer zu gestalten und von zufälligen Herstellungsparametern wie Textur und Konstitution der Graphitfilzzwischenlage unabhängig zu machen.

Der Erfindung liegt die Aufgabe zugrunde, das in der US-A-4 396 469 beschriebene elektrochemische Verfahren zur kontinuierlichen Beschichtung von Feststoffelektrolyten mit Elektrokatalysatoren weiterhin zu verfeinern und zu verbessern, dergestalt, dass abriebfeste, mechanisch und chemisch beständige, durch stabiles Langzeitverhalten und niedrige Zellenspannung in elektrochemischen Zellen ausgezeichnete Überzüge gewährleistet werden.

Diese Aufgabe wird erfindungsgemäss durch die im kennzeichnenden Teil des Anspruchs 1 angegebenen Merkmale gelöst.

Es hat sich überraschenderweise gezeigt, dass bei der elektrolytischen Reduktion des Metallsalzes zum Metall die Vorschubgeschwindigkeit und damit die Abscheidungsbedingungen eine ganz wesentliche Rolle spielen. Die Art und Weise der Bildung der metallischen Partikel in der Oberflächenzone des Feststoffelektrolyten hängt wesentlich von der Stromdichte und der Einwirkungszeit ab. Bei einem ersten und allenfalls zweiten Durchlauf der Feststoffelektrolyt-Folie zwischen den Walzen mit verhältnismässig hoher Geschwindigkeit werden in der Oberflächenzone kleinste Kristallkeime gebildet. Diese wachsen dann bei einem weiteren Durchlauf mit kleiner Geschwindigkeit zu einer ausserordentlich fest haftenden Oberflächenschicht zusammen. Dabei konnten ziemlich ausgeprägte Grenzen für die Geschwindigkeiten und die Stromdichten festgestellt werden.

Die Erfindung wird anhand der nachfolgenden, durch Figuren näher erläuterten Ausführungsbeispiele beschrieben.

Dabei zeigt:

Fig. 1 einen schematischen Querschnitt durch eine Vorrichtung zur Durchführung des Verfahrens,

Fig. 2 ein Diagramm der Abhängigkeit der Vorschubgeschwindigkeit von der Zeit,

Fig. 3 ein Diagramm der Abhängigkeit der Qualität der Beschichtung von der ersten Vorschubgeschwindigkeit,

Fig. 4 ein Diagramm der Abhängigkeit der Qualität der Beschichtung vom Strombelag.

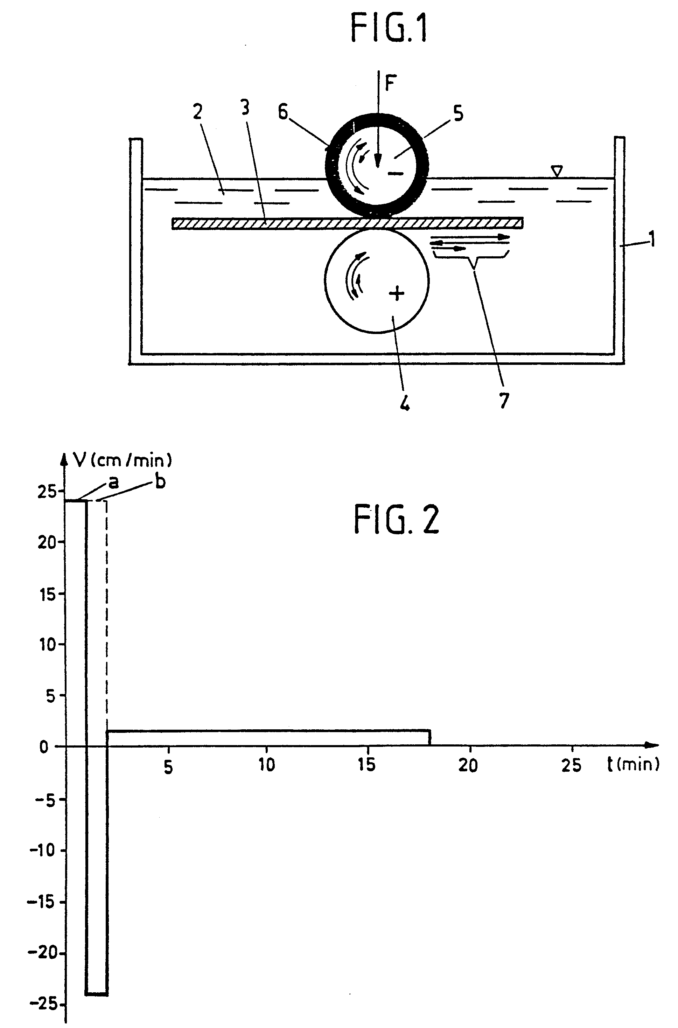

In Fig. 1 ist eine zur Durchführung des Verfahrens geeignete Vorrichtung schematisch dargestellt. In einer rechteckigen Wanne 1, welche beispielsweise aus Polypropylen bestehen kann, befindet sich ein Wasserbad 2 (destilliertes, bzw. vollentsalztes Wasser). Als Elektroden dienen die beiden Walzen 4 und 5, wobei diese zweckmässigerweise horizontalachsig angeordnet sind. Die als Anode dienende untere Walze 4, welche bevorzugt aus platiniertem Titan besteht, wird vom Wasserbad 2 vollständig überflutet, während die als Kathode wirkende obere Walze 5, die vorteilhafterweise aus korrosionsbeständigem Stahl besteht, nur im Elektrolysebereich in das Wasser eintaucht. Der zu beschichtende Feststoffelektrolyt 3, welcher als Folie vorliegt, befindet sich unter Zwischenschaltung eines Filzes 6 aus Kohlenstoff zwischen den beiden Walzen 4 und 5. Der Filz 6 ist auf der Kathodenseite angeordnet und umhüllt im vorliegenden Beispiel die Walze 5 koaxial. Er ist mit letzterer beispielsweise mittels Kunststoffkleber (Epoxyharz) fest verbunden. Die Anpresskraft ist durch einen vertikalen Pfeil F angedeutet. 7 stellt die Geschwindigkeitsvektoren der Bewegung des als Folie vorliegenden Feststoffelektrolyten 3 dar. Im vorliegenden Fall besteht das Verfahren aus einer Vorwärts- und einer Rückwärtsbewegung bei höherer Geschwindigkeit sowie einer anschliessenden Vorwärtsbewegung bei tieferer Geschwindigkeit.

Fig. 2 stellt ein Diagramm der Abhängigkeit der Vorschubgeschwindigkeit des Feststoffelektrolyten 3 von der Zeit dar. Der ausgezogene Linienzug "a" bezieht sich auf das normalerweise durchgeführte Verfahren (siehe Pfeile 7 in Fig. 1). Als Variante mit nur gleichsinnigen (Vorwärts-) Bewegungen ist ferner ein gestrichelter Linienzug "b" eingezeichnet. Prinzipiell spielt die Bewegungsrichtung keine Rolle. Die Wahl der Variante ist nur durch praktische Gegebenheiten bedingt.

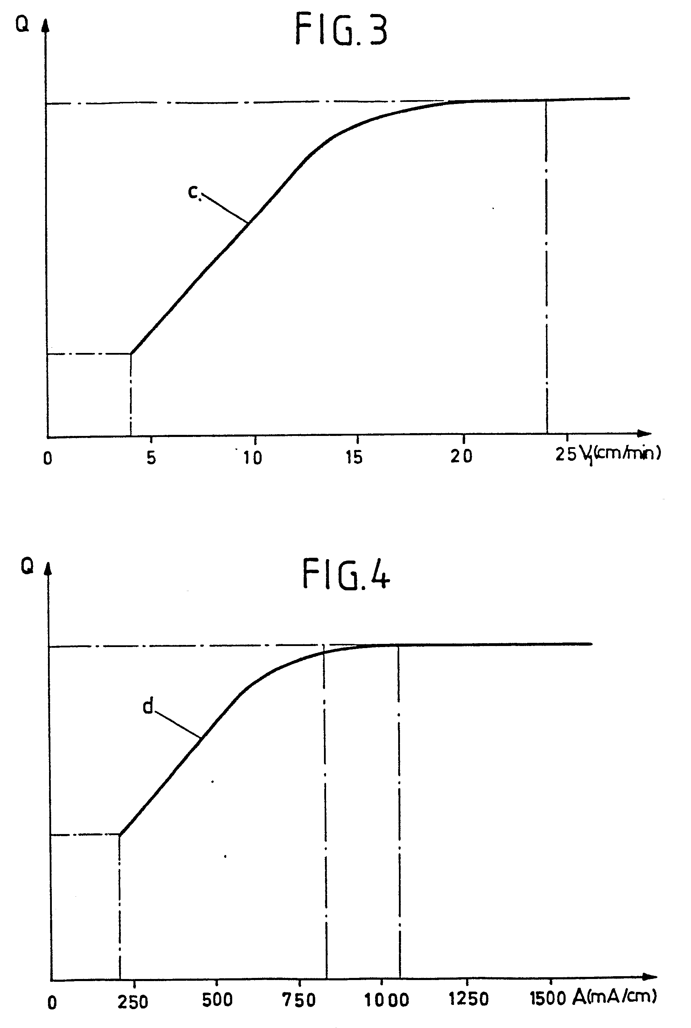

Fig. 3 zeigt ein Diagramm der Abhängigkeit der Qualität der Beschichtung des Feststoffelektrolyten 3 von der ersten Vorschubgeschwindigkeit $v_1$. Dabei wurde diese Geschwindigkeit für je eine Vorwärts- und eine Rückwärtsbewegung pro Versuch konstant gehalten und anschliessend eine zusätzliche Vorwärtsbewegung bei einer für alle Versuche unveränderten zweiten Geschwindigkeit von 1,5 cm/min durchgeführt. Der Linienzug "c" verbindet die Mittelwerte aus zahlreichen Versuchen. Als Qualität Q wurde jeweils eine charakteristische Eigenschaft in einem nicht näher quantifizierten willkürlichen Maßstab aufgetragen. Dazu wurden unter anderem die Haftfestigkeit der Beschichtung, ihre Gleichförmigkeit und Homogenität sowie Unabhängigkeit von der Textur und Qualität des die obere Walze 5 (Kathode) umhüllenden Filzes 6 aus Kohlenstoff und die Belegungsdichte der metallischen Abscheidung bei sonst gleicher Menge pro Flächeneinheit wie deren Brillanz herangezogen. Alle Qualitätsmerkmale Q streben mit steigender Geschwindigkeit $v_1$ von einem Mindestwert anfangend einem Maximum zu, welches bei ca. 17,5 cm/min erreicht wird. Eine weitere Steigerung der Geschwindigkeit $v_1$ führt nicht mehr zu einer zusätzlichen Qualitätsverbesserung der Beschichtung.

In Fig. 4 ist ein Diagramm der Abhängigkeit der Qualität der Beschichtung des Feststoffelektrolyten 3 vom Strombelag A dargestellt. Dabei ist A in mA/cm definiert als der durch den Feststoffelektrolyten 3 pro Längeneinheit der Berührungslinie der Walzen (= Breite des Feststoffelektrolyten 3) hindurchgehende Strom. Die übrigen Versuchsparameter wurden konstant gehalten. Das Ergebnis wurde nach je einer Vorwärts- und Rückwärtsbewegung bei einer Geschwindigkeit von 24 cm/min und einer zusätzlichen Vorwärtsbewegung bei einer solchen von 1,5 cm/min untersucht. Für den Begriff Qualität Q gilt das unter Figur 3 Gesagte. Q strebt ebenfalls einem Maximum zu, welches bei ca. 630 mA/cm (entsprechend einem totalen Strom von ca.20 A für eine Berührungslinie von 24 cm Länge in vorliegendem Beispiel) erreicht wird und für weitere Steigerungen des Strombelages A praktisch konstant bleibt.

**Ausführungsbeispiel I:**

Siehe Figuren 1 und 2:
Zur Durchführung des Verfahrens diente die in Fig. 1 schematisch dargestellte Apparatur.
Als zu beschichtender Feststoffelektrolyt 3 wurde eine gequollene Folie aus einem Kunststoffpolymer mit dem Handelsnamen "Nafion 120" (Basis: perfluorierte Sulfosäure) von Du Pont de Nemours gewählt. Die Folie hatte eine quadratische Fläche von 24 cm Seitenlänge und eine Dicke von 0,2 mm. Sie wurde zunächst während 30 min mit einer Lösung von 0,5 Gew.-% $Pt(NH_3)_2(NO_2)_2$ (Diamminplatindinitrit) in destilliertem Wasser bei einer Temperatur von ca. 80° C imprägniert. Nach der Imprägnierung wurde der Feststoffelektrolyt 3 aus der Lösung herausgenommen und mit destilliertem Wasser abgespült. Daraufhin wurde der Feststoffelektrolyt 3 in der Apparatur gemäss Fig. 1 einem Elektrolyseprozess unterworfen, indem er mehrmals zwischen den Walzen 4 und 5 hindurchgeführt wurde. Dabei wurde das Programm gemäss Fig. 2 eingehalten.

Die totale Anpresskraft F der Federn betrug ca. 220 N, die Stromstärke 25 A (entsprechend einem Strombelag von 1040 mA/cm). Die Vorschubgeschwindigkeit v gemäss Linienzug "a" betrug:
Für den ersten Schritt (vorwärts): + 24 cm/min
Für den zweiten Schritt (rückwärts): - 24 cm/min
Für den dritten Schritt (vorwärts): + 1,5 cm/min
Die Temperatur des Wasserbades war 25° C.

Nach dem Abscheidungsprozess wurde der Feststoffelektrolyt 3 bei 80 - 90° C während 30 min in 1 N Salzsäure behandelt und anschliessend mit destilliertem Wasser gespült und getrocknet.

Das Aussehen des Platinüberzuges war unabhängig vom verwendeten Filz 6 aus Kohlenstoff (Graphit). D.h., dass die Textur des Filzes 6 nicht auf der Platinoberfläche abgebildet wurde. Letztere zeigte einen gleichmässigen, homogenen Aspekt (Reflexionsvermögen, Brillanz).

Die Haftfestigkeit der Platinschicht erwies sich als ausgezeichnet. Es konnten weder mit der Fingerspitze Partikel abgerieben werden, noch lösten sich Partikel bei der Ablösungsprobe mit aufgeklebtem Klebband (Scotch). Auf die Platinoberfläche wurde ein Epoxyharz (Araldit Rapid) aufgebracht und während 8 h bei Raumtemperatur ausgehärtet. Beim darauffolgenden Ablösungsversuch konnten keinerlei am Epoxyharz haftende Platinpartikel festgestellt werden.

**Ausführungsbeispiel II:**

Es wurde genau gleich verfahren wie unter Beispiel I angegeben, wobei jedoch das Programm gemäss Linienzug "b" (Fig. 2) eingehalten wurde und die Vorschubgeschwindigkeit v des Feststoffelektrolyten 3 wie folgt eingehalten wurde:
Für den ersten Schritt (vorwärts): + 24 cm/min
Für den zweiten Schritt (vorwärts): + 24 cm/min

Für den dritten Schritt (vorwärts): + 1,5 cm/min.

Die Ergebnisse waren die gleichen wie unter Beispiel I. Es konnte also keine Abhängigkeit der Qualität der Platinbeschichtung vom Richtungssinn des Vorschubes des Feststoffelektrolyten 3 festgestellt werden.

**Ausführungsbeispiel III:**

Siehe Figur 3.

Aus dem Feststoffelektrolyten 3 wurde eine grössere Anzahl quadratischer Folien von 24 cm Seitenlänge geschnitten und gemäss Beispiel I behandelt. Beim Elektrolyseprozess wurde die erste Vorschubgeschwindigkeit $v_1$ sukzessive zwischen 4 cm/min und 30 cm/min variiert. Dabei wurde $v_1$ jeweils für eine Vorwärts- und Rückwärtsbewegung (entsprechend erster und zweiter Schritt) konstant gehalten.

Das Ergebnis ist in Fig. 3 graphisch (nur qualitativ, nicht quantitativ zu verstehen:) dargestellt. Die Qualität Q der Platinbeschichtung nimmt mit steigender Vorschubgeschwindigkeit des Feststoffelektrolyten 3 stetig zu und nähert sich einem nicht mehr weiter zu verbessernden Maximalwert. Es wurde insbesondere die Haftfestigkeit mit der Abrieb-, Klebband- und Epoxyharzprobe untersucht.

**Ausführungsbeiseiel IV:**

Siehe Figur 4:

Um die abhängigkeit der Qualität Q des Platinüberzuges auf dem Feststoffelektrolyten 3 von der Stromstärke des Elektrolysevorganges festzustellen, wurde ähnlich Beispiel III eine Anzahl gleicher Folien einem sukzessive gesteigerten Strombelag A unterworfen. Dabei wurde der Strom pro Versuch jeweils konstant gehalten, von Versuch zu Versuch jedoch von anfänglich 5 A auf 25 A gesteigert. Dies entsprach einer Steigerung des Strombelages von anfänglich 210 mA/cm auf 1040 mA/cm. Bei ca. 830 mA/cm (entsprechend einem Strom von ca. 20 A) wurde praktisch der maximale Qualitätswert erreicht.

Es wurden noch weitere Versuche durchgeführt, welche alle darauf hinausliefen, dass im allgemeinen bei einem Strambelag van mindestens 830 mA/cm für alle Bewegungsschritte des Feststoffelektrolyten 3 eine erste Vorschubgeschwindigkeit von mindestens 15 cm/min und höchstens 30 cm/min (höhere Geschwindigkeiten bringen keine qualitätsverbesserung, führen höchstens zu technologischen Schwierigkeiten) und eine weitere von mindestens 1 cm/min und höchstens 2 cm/min notwendig sind. Bei nur einmaligem Durchlauf des Feststoffelektrolyten bei erhöhter Geschwindigkeit werden die optimalen qualitätswerte jedoch nicht erreicht. Dies ist erst bei zweimaligem Durchlauf mit einer Geschwindigkeit von mindestens 17,5 cm/min und anschliessendem Durchlauf bei der niedrigeren Geschwindigkeit von 1 bis 2 cm/min möglich (siehe Beispiele!). Eine weitere Steigerung des Strombelages wesentlich über 1040 mA/cm hinaus führt zu keiner weiteren qualitätsverbesserung der Platinabscheidung, wobei dann die technologischen Schwierigkeiten eher wieder zunehmen. Optimale Resultate wurden erreicht mit einer Vorwärtsbewegung bei 24 cm/min, einer Rückwärtsbewegung bei 24 cm/min und einer weiteren Vorwärtsbewegung bei 1,5 cm/min, alles unter einem Strombelag von ca. 1040 mA/cm (siehe Beispiel I!).

Durch das erfindungsgemässe Verfahren wird die Herstellung sehr fest haftender Schichten von katalytisch aktiven Metallen, insbesondere von Edelmetallen auf Folien von Kunststoffpolymeren als Feststoffelektrolyten für elektrochemische Zellen ermöglicht, welche in Bezug auf Homogenität, Gleichmässigkeit und Langzeitverhalten optimale Eigenschaften aufweisen.

**Patentansprüche**

1. Verfahren zur kontinuierlichen Beschichtung eines Feststoffelektrolyten (3) mit einem katalytisch aktiven Metall, wobei der als Folie vorliegende Feststoffelektrolyt (3) mit einer das Metall als Salz enthaltenden Lösung getränkt, in Wasser gespült, einem Elektrolysevorgang in einer mit destilliertem Wasser gespeisten Zelle in Form einer zwei Walzen (4, 5) als Elektroden und einen Filz (6) aus Kohlenstoff und ein Wasserbad (2) enthaltenden Wanne (1) unterworfen wird, dadurch gekennzeichnet, dass der Feststoffelektrolyt (3) mindestens ein Mal mit einer Geschwindigkeit von mindestens 15 cm/min und höchstens 30 cm/min und mindestens ein weiteres Mal mit einer Geschwindigkeit von mindestens 1 cm/min und höchstens 2 cm/min zwischen den Walzen (4, 5) durchgeführt wird und dass der auf die Berührungslinie zwischen den Walzen (4, 5) und dem Feststoffelektrolyten (3) bezogene lineare Strombelag mindestens 830 mA/cm beträgt.

2. Verfahren nach Anspruch 1, dadurch gekennzeichnet, dass der Feststoffelektrolyt (3) mindestens zwei Mal mit einer Geschwindigkeit von mindestens 17,5 cm/min und ein weiteres Mal mit einer Geschwindigkeit von 1,5 cm/min zwischen den Walzen (4, 5) durchgeführt wird.

3. Verfahren nach Anspruch 1, dadurch gekennzeichnet, dass der Feststoffelektrolyt (3) ein Mal mit einer Geschwindigkeit von 24 cm/min in der einen Richtung, ein Mal mit einer Geschwindigkeit von 24 cm/min in der entgegengesetzten Richtung und ein Mal mit einer Geschwindigkeit von 1,5 cm/min in der ursprünglichen Richtung zwischen den Walzen (4, 5) durchgeführt wird.

## Claims

1. Process for continuously coating a solid electrolyte (3) with a catalytically active metal, in which the solid electrolyte (3), which takes the form of a film, is soaked with a solution contaning the metal as salt, rinsed in water and subjected to an electrolysis operation in a cell fed with distilled water in the form oof a tank containing two rollers (4, 5) as electrodes and a carbon felt (6) and a water bath (2), characterized in that the solid electrolyte (5) is passed at least once with a velocity of at least 15 cm/min and at most 50 cm/min and at least a further time with a velocity of at least 1 cm/min and at most 2 cm/min between the rollers (4, 5), and that the linear current coverage with reference to the line of contact between the rollers (4, 5) and the solid electrolyte (3) is at least 830 mA/cm.

2. Process according to Claim 1, characterized in that the solid electrolyte (3) is passed at least twice with a velocity of at least 17.5 cm/min and a further time with a velocity of 1.5 cm/min between the rollers (4, 5).

3. Process according to Claim 1, characterized in that the solid electrolyte (3) is passed once with a velocity of 24 cm/min in one direction, once with a velocity of 24 cm/min in the opposite direction and once with a velocity of 1.5 cm/min in the original direction between the rollers (4, 5).

## Revendications

1. Procédé pour revêtir en continu un electrolyte solide (3) d'un métal catalytiquement actif, suivant lequel l'électrolyte solide (3) se présentant en forme de feuille est imprégné d'une solution contenant le metal à l'état de sel, rincé à l'eau et soumis à un processus d'électrolyse dans une cellule alimentée en eau distillée sous la forme de deux cylindres (4, 5) servant d'électrodes et d'un feutre (6) en carbone outre d'une cuve (1) contenant un bain d'eau (2), caractérisé en ce que l'électrolyte solide (3) est conduit au moins une fois à une vitesse d'au moins 15 cm/minute et au maximum de 30 cm/minute et au moins une fois de plus à une vitesse d'au moins 1 cm/minute et au maximum de 2 cm/minute entre les cylindres (4, 5) et en ce que la densite linéique de courant rapportée à la ligne de contact entre les cylindres (4, 5) et l'électrolyte solide (3) est d'au moins 830 mA/cm.

2. Procédé suivant la revendication 1, caractérisé en ce que l'électrolyte solide (3) est conduit au moins deux fois avec une vitesse d'au moins 17,5 cm/minute et une fois de plus avec une vitesse de 1,5 cm/minute entre les cylindres (4, 5).

3. Procede suivant la revendication 1, caractérisé en ce que l'électrolyte solide (3) est conduit une fois à une vitesse de 24 cm/minute dans un sens, une fois à une vitesse de 24 cm/minute dans le sens oppose et une fois à une vitesse de 1,5 cm/minute dans le sens d'origine entre les cylindres (4, 5).

# FIG.1

# FIG. 2

# FIG.3

# FIG.4